# EUROPÄISCHE PATENTSCHRIFT

(11) **EP 0 622 438 B1**
(45) Veröffentlichungstag und Bekanntmachung des Hinweises auf die Patenterteilung: **10.06.1998**
(21) Anmeldenummer: 93107085.8
(22) Anmeldetag: 30.04.1993
(51) Int. Cl.: C09K 3/14, C04B 35/10

(54) **Keramisches Korundschleifmittel**
Corundum ceramic abrasive material
Matériau abrasif céramique en corindon

(43) Veröffentlichungstag der Anmeldung: 02.11.1994
(73) Patentinhaber: Hermes Schleifmittel GmbH & Co., D-22547 Hamburg (DE)
(72) Erfinder: Wagner, Eckhard, Dipl.-Ing., W-2200 Elmshorn (DE); Becker, Günther, Dr.-Ing., W-2000 Hamburg 56 (DE); Bartels, Günter, Dipl.-Ing., D-2057 Reinbek (DE)
(74) Vertreter: Glawe, Delfs, Moll & Partner

(56) Entgegenhaltungen:
- EP-A- 0 155 831
- EP-A- 0 293 163
- EP-A- 0 396 988
- EP-A- 0 441 640
- EP-A- 0 491 184
- DE-B- 1 296 367
- US-A- 4 713 360
- US-A- 4 866 016
- DATABASE WPI Week 7920, Derwent Publications Ltd., London, GB; AN 79-38958B

## Beschreibung

Die Erfindung bezieht sich auf ein Schleifmittel aus keramischem Korund, auf ein Verfahren zu dessen Herstellung und auf daraus hergestellte Werkzeuge.

Neben geschmolzenem Korund wird zunehmend keramischer Korund eingesetzt, der aufgrund seines polykristallinen Aufbaus ein vorteilhaftes Verschleißverhalten zeigt und der bei der Bearbeitung spezieller Werkstoffe - z.B. von hochlegierten Edelstählen - eine deutliche Erhöhung der Werkzeugstandzeit ermöglicht. Ein verbreitetes Verfahren zur Herstellung derartiger keramischer Korundschleifmittel ist das Sol-Gel-Verfahren, wobei ein Sol, welches eine wasserhaltige Tonerde, meist Aluminiumoxidhydrat enthält, durch Zugabe von Säure in ein Gel übergeführt wird. Nach dem Trocknen wird dieses kalziniert, gebrochen und schließlich gesintert. Insbesondere im Verlauf der vergangenen zehn Jahre sind vielfältige Versuche unternommen worden, die Qualität eines derart gewonnenen Schleifmittels durch besondere verfahrenstechnische Schritte (EP-PS 263 810) oder durch stoffliche Zugaben zu verbessern. Letztere können entsprechend ihrer Wirkung beim Sinterprozeß als Keimbildner (M. Kumagai and G.L. Messing: Controlled Transformation ... J.Am.Ceram. Soc. 68 (9), 500-505 (1987)) einerseits oder als modifizierende Komponente andererseits eingestuft werden. Letztere beeinflussen in unterschiedlicher Weise den Sinterprozeß und den Aufbau und die Eigenschaften des Endproduktes. Eingesetzt als modifizierende Komponenten werden beispielsweise Magnesium, Hafnium, Kobalt, Nickel, Zink (EP-PS 0 024 099), Yttrium (EP-PS 228 856), Eisenoxid (EP-PS 200 487), seltene Erden (EP-PS 293 164), Lithium (EP-A- 441 640). Zwar bewirken diese Zusätze zum Teil eine deutliche Verbesserung der Schleifeigenschaften, jedoch zeigt sich eine breite Streuung der Werte, die sich qualitätsmindernd auswirkt.

US-A-4,713,360 offenbart ein Verfahren zum Herstellen keramischer Körper durch eine Oxidationsreaktion eines geschmolzenen Metalls mit einem in der Gasphase vorliegenden Oxidationsmittel. Das Verfahren geht aus von metallischen Körpern, der fertige keramische Körper enthält ein mikrofeines Netzwerk aus nichtoxidiertem Metall.

ZA-A-7 707 153 offenbart, ein fertiges Schleifkorn mit pulverförmigen Metall zu mischen und diese Mischung zu erwärmen, um eine Aggregation von Schleifpartikeln herzustellen. Das geschmolzene Metall dient als Bindemittel für das Schleifkorn, es wird selbst nicht Bestandteil der polykristallinen Struktur.

EP-A-491 184 offenbart einen gesinterten Verbundschleifkörper, der in einer α-Al₂O₃-Matrix einen Hartstoff enthält. Als Hartstoff wird bevorzugt Siliciumcarbid verwendet.

Die Erfindung geht von der Erkenntnis aus, daß neben den üblicherweise für Korundschleifmittel benannten physikalischen Stoffeigenschaften wie Härte, Zähigkeit, Widerstand gegen Mikrorißausbreitung oder Mikroverschleiß zusätzlich auch einer hohen Konstanz dieser Werte innerhalb einer Kornfraktion eine wesentliche Bedeutung für das Zustandekommen einer erhöhten Werkzeugstandzeit beigemessen werden muß.

Der Erfindung liegt die Aufgabe zugrunde, ein Korundschleifmittel herzustellen, das neben den üblichen Qualitätsmerkmalen (insbesondere einer hohen Härte) nur geringen Qualitätsschwankungen innerhalb einer Korncharge unterliegt. Überraschenderweise wurde gefunden, daß dies durch Zusatz von Zinn erreicht wird.

Gegenstand der Erfindung ist somit ein Schleifmittel, das im wesentlichen aus gesintertem polykristallinen keramischen Korund besteht und durch das Sol-Gel-Verfahren erhältlich ist. Es ist dadurch gekennzeichnet, daß der gesinterte Korund mehr als 0,01 Gew.-% Zinn, berechnet als Zinnoxid, als Bestandteil der polykristallinen Struktur enthält. Der Zinngehalt liegt vorzugsweise über 0,1 Gew.-%. Ein Gehalt von 5 Gew.-%, vorzugsweise 1 Gew.-%, sollte nicht überschritten werden. Vorteilhafte Merkmale des Schleifmittels sind in den Unteransprüchen 2 bis 9 angegeben.

Gegenstand der Erfindung ist ferner ein Schleifwerkzeug, das ein erfindungsgemäßes Schleifmittel enthält. Vorteilhafte Ausführungsformen finden sich in den Unteransprüchen 11 und 12.

Gegenstand der Erfindung ist ferner ein Verfahren zum Herstellen eines keramischen Korundschleifmittels, das folgende Schritte aufweist:
a) Herstellen eines Sols, das ein Aluminiumhydroxid als Ausgangsstoff enthält, wobei durch Zugabe von entmineralisiertem Wasser sowie Salpetersäure zu dem Ausgangsstoff eine Suspension hergestellt wird, die zwecks Abtrennung grober Inhaltsstoffe zentrifugiert wird,
b) Überführen des Sols in ein Gel,
c) Trocknen und/oder Kalzinieren des Gels,
d) Brechen und ggf. Klassieren des getrockneten oder kalzinierten Zwischenprodukts,
e) Sintern des gebrochenen Zwischenprodukts.

Es ist dadurch gekennzeichnet, daß in Schritt a) dem Sol oder in Schritt b) dem Gel ein zinnhaltiger Stoff in einer solchen Menge zugesetzt wird, daß das in Schritt e) erhaltene gesinterte Material mehr als 0,01 Gew.-% Zinn, berechnet als Zinnoxid, enthält.

Vorteilhafte Ausgestaltungen finden sich in den Unteransprüchen 14 bis 18.

Härte und Feinkörnigkeit können - wie bekannt - durch den Zusatz von Magnesium verbessert werden. Ferner hat es sich als sehr zweckmäßig erwiesen, wenn das Schleifmittel auch Lithium enthält, wodurch Härte und Produktgleichmäßigkeit weiter verbessert werden. Schließlich können weitere modifizierende Komponenten wie Kobalt, Yttrium, Hafnium, Eisen und/oder seltene Erden eingesetzt werden.

Bei der optischen Prüfung des in der Art der später angegebenen Beispiele erzeugten Produkts im Bruchbild oder geätzten Schliffbild läßt sich eine von herkömmlichen Produkten leicht unterscheidbare Struktur feststellen. Zwischen auffällig größeren Partikeln, die zum Teil eine für Alpha-Aluminiumoxid typische Terrassenstruktur (Petzold/Ulbricht: Tonerde und Tonerdewerkstoffe, S. 83, Bild 7.14) zeigen, befindet sich eine Ansammlung kleinerer Partikeln. Das mittlere Abmessungsverhältnis. Das mittlere Abmessungsverhältnis beträgt mindestens 3 : 1, ist aber in der Regel größer als 5 : 1. Benachbarte größere Partikeln sind voneinander weitgehend, meist nahezu vollständig, durch eine Schicht der kleineren Partikeln getrennt. Die Schichten kleinerer Partikeln bilden eine im wesentlichen durchgehende Matrix, in der die größeren Partikeln eingebettet sind. Mindestens stehen Ansammlungen kleinerer Partikeln, die sich zwischen den größeren Partikeln in deren Zwickelzwischenräume erstrecken, weiträuming verzweigt miteinander in Verbindung. - Dem unterschiedlichen Erscheinungsbild der Partikeln entspricht eine unterschiedliche Zusammensetzung. Die größeren Partikeln enthalten einen höheren Anteil von Alpha-Aluminiumoxid als die kleineren, bzw. bestehen nahezu ausschließlich daraus. Das Zinn ist im höheren Anteil bzw. überwiegend in den kleineren Partikeln enthalten.

Dies gilt auch für etwaige weitere modifizierende Komponenten, insbesondere Magnesium, Yttrium, Lithium, Kobalt, Eisen, Titan, seltene Erden. Wenn in diesem Zusammenhang von Partikeln gesprochen wird, so sind damit diejenigen Formeinheiten gemeint, die im geätzten Schleifbild durch deutliche Grenzen voneinander abgehoben sind. Sie werden in der Literatur auch als Kristallite bezeichnet.

Das erfindungsgemäße Schleifmittel weist neben hoher Härte insbesondere gegenüber hoher thermischer und mechanischer Belastung eine ungewöhnliche Beständigkeit auf, so daß beispielsweise beim Einsatz von Schleifbändern, welche mit dem erfindungsgemäßen Schleifmittel bestreut sind, neben deutlich erhöhten Abschliffmassen pro Zeitintervall zusätzlich eine wesentliche Erhöhung der Werkzeugstandzeit erzielt wird.

Das erfindungsgemäße Schleifmittel kann auf Unterlagen, als Bestandteil gebundener Schleifwerkzeuge oder als loses Schleifmittel, beispielsweise beim Strahlen oder Läppen, eingesetzt werden. In allen Anwendungsbereichen kann eine beliebige qualitative und quantitative Kombination mit anderen Schleifmitteln erfolgen. Besonders von Vorteil ist die Mischung mit Schleifkorn höherer bzw. besonders hoher Härte wie z.B. Siliziumkarbid, kubisches Bornitrit oder auch Diamant. Darüber hinaus kann das erfindungsgemäße Schleifmittel auch als Matrix fungieren, in welche ein oder mehrere qualitativ unterschiedliche Schleifmittel eingebunden sind. Letzteres erreicht man dadurch, daß man das andere Schleifmittel einem Zwischenprodukt, vorzugsweise dem Sol oder Gel bei der Herstellung des erfindungsgemäßen Schleifmittels beimischt.

Im Herstellungsverfahren sorgt man dafür, daß der das Zinn enthaltende Stoff mit den übrigen Ausgangsstoffen innig und fein verteilt vermischt wird. Geht man von pulverförmigen Ausgangsstoffen aus, die miteinander verpreßt und dann gesintert werden, wird der das Zinn enthaltende Stoff vorzugsweise gleichfalls pulverförmig zugesetzt sein. Er kann dem zu sinternden Gut auch in flüssiger Form beigemischt oder aufgesprüht werden. Eine besonders innige Vermischung ergibt sich bei Anwendung des Sol-Gel-Verfahrens, wenn der das Zinn enthaltende Stoff den Ausgangsstoffen bereits vor Bildung des Gels beigegeben wird, so daß er in der zum Gel führenden Dispersion (Sol) enthalten ist. Er in fester sehr feinteilig gemahlener Form oder in Lösung vorliegen. Es wurde festgestellt, daß dann bereits das getrocknete Gel eine gegenüber der zinnfreien Verfahrensweise deutlich veränderte, mechanisch höher belastbare Beschaffenheit aufweist. Daraus kann nicht nur auf eine beträchtliche modifizierende Wirkung geschlossen werden, sondern es wird auch das Brechen des getrockneten Gels dadurch hinsichtlich der Ausbeute und der Form der gebrochenen Körner verbessert.

Als besonders zweckmäßige Verbindung hat sich Zinnoxid bewährt, das in der Form von pulverförmigem SnO₂ den Ausgangsstoffen bzw. den Zwischenprodukten zugegeben wird. Verwendbar sind jedoch auch andere Zinn enthaltende Stoffe wie nicht oxidische Zinnverbindungen, beispielsweise Zinnsalze.

Zweckmäßigerweise enthält das Sol sehr feinteiliges, ggf. gemahlenes Gamma-Aluminiumoxid.

Ein besonders vorteilhaftes Ergebnis wird durch weiteren Zusatz von Lithium erreicht, das vorzugsweise als Lithiumsalz in wassergelöster Form irgendeiner Zwischenstufe beigemischt wird. Besonders zweckmäßig ist die Anwesenheit einer Lithiumverbindung, vorzugsweise eines Lithiumsalzes, bereits im Sol in gelöster Form. Ferner ist es vorteilhaft, wenn etwaige weitere modifizierende Komponenten, insbesondere die weiter oben erwähnten, bereits im Sol in feinteiliger fester oder gelöster Form enthalten sind. Sie können auch in ein anderes Zwischenprodukt eingegeben werden. Vorteilhafte Mengen (als Oxid) sind:

| | |
|---|---|
| Magnesium | 0,1 - 1 % |
| Yttrium | 0,1 - 1 % |
| Lithium | 0,01 - 5 % vorzugsweise 1,5 - 3 % |
| Kobalt | 0,1 - 0,4 % |
| seltene Erden | 0,1 - 2 % |

Im übrigen bedürfen die Verfahrensschritte des Sol-Gel-Verfahrens keiner näheren Erläuterung, weil sie dem allgemein zugänglichen Stand der Technik, insbesondere der oben angegebenen Patentliteratur entnommen werden können.

Zweckmäßigerweise wird als Ausgangsstoff ein Aluminiumhydroxid, vorzugsweise ein Aluminiumoxidhydroxid vom Boehmit-Typ verwendet. Bewährt hat sich beispielsweise "Disperal Aluminas" der Firma Condea-Chemie, Brunsbüttel. Durch Zugabe von entmineralisiertem Wasser sowie Salpetersäure wird eine Suspension erhalten, die zwecks Abtrennung grober Inhaltsstoffe zentrifugiert wird. Vorteilhaft, jedoch nicht zwingend erforderlich, ist die Zugabe eines Keimbildners oder von Gamma-Aluminiumoxid. Letzteres kann zunächst in einer wässrigen, salpetersauren Suspension vorhanden sein, die gleichfalls zentrifugiert wird. Durch Mischung bestimmter Mengen dieser Suspensionen sowie ggf. weiterer, vorzugsweise wässriger Lösungen oder Suspensionen modifizierender Komponenten wird eine Suspension erhalten, die mittels Salpetersäure und/oder deren in wässriger Lösung vorliegenden Salzen in ein Gel überführt wird. Dieses Gel wird getrocknet und kalziniert. Das getrocknete oder kalzinierte Zwischenprodukt wird gebrochen und ggf. klassiert. Das kalzinierte Zwischenprodukt wird gesintert. Schließlich wird das dadurch erhaltene Schleifmittel gesiebt und zu Kornchargen einheitlicher Körnung gemischt.

Es wurde gefunden, daß der Kombinierte Einsatz von Zinn und Lithium, ggf. zusammen mit den weiter oben angegebenen Komponenten zu sehr guten Ergebnissen führt. Das gilt insbesondere für ein Lithiumzusatz in der Größenordnung (als Oxid im gesinterten Produkt) von 2 Gew.-%. Zwar ist der Zusatz von Lithium an sich bekannt (EP 0 441 640), jedoch nur in Mengen bis zu 1,5 Gew.-% des Oxids im gesinterten Produkt. Darüber soll sich ein Abfall der schleiftechnischen Qualitäten ergeben. Erfindungsgemäß wurde jedoch das Gegenteil festgestellt. Ein erfindungsgemäß vorteilhaftes Produkt zeichnet sich deshalb durch einen Gehalt von mehr als 1,5 Gew.-% Lithium (als Oxid) im gesinterten Produkt aus.

### Beispiel 1

2000 kg entmineralisiertes Wasser (50°C), 28 1 HNO₃-Lsg (53%) sowie 1000 kg Disperal werden zu einer Suspension vermischt, aus der nach dem Zentrifugieren die Vorstufe 1 erhalten wird. Der Anteil der Festkörper beträgt ca. 30 Gew.-%

1000 kg entmineralisiertes Wasser (50°C), 27 kg Gamma-Al₂O₃ ("Puralox 400" der Firma Condea, Brunsbüttel) sowie 5 l HNO₃Lsg (53%) bilden nach dem Zentrifugieren die Vorstufe 2 (Festkörperanteil 2,5 Gew.-%).

1000 kg der Vorstufe 1, 500 kg der Vorstufe 2, 1 kg Zinnoxid (als wässrige Suspension), 3,3 kg Magnesiumnitrat-6-Hydrat (in wässriger Lösung), 0,2 kg Kobaltnitrat-6-Hydrat (in wässriger Lösung) und 1 kg Yttriumoxid werden gemischt. Dadurch wird die Vorstufe 3 erhalten.

Vorstufe 4 enthält 70 kg entmineralisiertes Wasser, sowie 20 kg Aluminiumnitrat-9-Hydrat.

Die Mischung von 1505,5 kg der Vorstufe 3 mit 115,4 kg der Vorstufe 4 führt zur Bildung eines Gels, das bei 130°C über einen Zeitraum von 20 min getrocknet wird.

Nach dem Kalzinieren (850°C, 15min), Brechen und dem Sintern im Drehrohrofen (1450°C, 12min) wird das Schleifkorn gesiebt und klassiert. Das derart erhaltene Schleifkorn weist einen Anteil von Zinn (als Zinnoxid) von 0,36 Gew.-% auf. Es hatte eine durchschnittliche Härte von 19,1 GPa.

### Beispiel 2

Wie Beispiel 1 mit 5,6 kg Zinnoxid in der Vorstufe 3. Das hergestellte Korn hatte eine mittlere Härte von 18,1 GPa. Die Dichte lag höher als in Beispiel 1.

### Beispiele 3

Wie Beispiel 1 mit zusätzlich 25,4 kg Lithiumnitrat. Das erhaltene Korn wies einen Anteil von Lithium (als Lithiumoxid) von 2 % auf. Es hatte eine durchschnittliche Knoop-Härte von 22,22 GPa.

### Beispiele 4 bis 10

Verfahren und stoffliche Zusammensetzung wie Beispiel 3, jedoch wird der Anteil des Lithiumnitrates derart variiert, daß der Anteil des Lithiumoxides am Endprodukt

| | |
|---|---|
| 0,1 Gew.-% | (Beispiel 4) |
| 0,2 Gew.-% | (Beispiel 5) |
| 0,3 Gew.-% | (Beispiel 6) |
| 0,4 Gew.-% | (Beispiel 7) |
| 0,5 Gew.-% | (Beispiel 8) |
| 1,0 Gew.-% | (Beispiel 9) |
| 3,0 Gew.-% | (Beispiel 10) |

beträgt.

Die Messung der Härte (Verfahren nach Knoop) wurde mit einem Prüfgerät des Herstellers Shimadzu, Typ HMV-2000 durchgeführt

| | **mittlere Härte nach Knoop** |
|---|---|
| | **[GPa]** |
| Beispiel 4 | 18,9 |
| Beispiel 5 | 20,3 |
| Beispiel 6 | 20,5 |
| Beispiel 7 | 20,5 |
| Beispiel 8 | 20,6 |
| Beispiel 9 | 20,7 |
| Beispiel 10 | 19,7 |

### Beispiel 11

Entsprechend Beispiel 3 wurde in technischem Maßstab das erfindungsgemäße Schleifmittel produziert, wobei zeitlich versetzt im Abstand von 60 min jeweils zwei Proben des Schleifkorns aus der laufenden Produktion entnommen wurden.

Jeweils 10 Schleifkörner einer Probe wurden einer Härtemessung mit folgenden Ergebnissen (Knoop GPa) unterzogen.

| **Probe 1:** |
|---|
| 22,22 |
| 21,21 |
| 20,57 |
| 21,88 |
| 21,88 |
| 20,72 |
| 21,88 |
| 21,04 |
| 21,88 |
| 22,22 |
| m_{A} =21,55 |

| **Probe 2:** |
|---|
| 22,22 |
| 23,70 |
| 20,88 |
| 22,58 |
| 22,22 |
| 21,54 |
| 20,41 |
| 20,72 |
| 21,04 |
| 21,04 |
| m_{A} =21,64 |

### Beispiel 12

Zur Beurteilung der Leistungsfähigkeit des erfindungsgemäßen Schleifmittels wurden mit dem entsprechend den Beispielen 1 und 3 hergestellten Schleifkorn der Körnung P 36 Vulkanfiberschleifscheiben hergestellt

Als Vergleichsmuster wurden übereinstimmend hergestellte Vulkanfiberschleifscheiben eingesetzt, welche Schmelzkorund (Vergleichsmuster A) enthielten.

Der Durchmesser der Scheiben betrug einheitlich 180 mm (Ausführung mit Kreuzschlitz, die Drehzahl 6000 min⁻¹. Geschliffen wurde ein Stahlrohr ST 37, Druchmesser 195 mm, das gegenläufig zur Schleifscheibe eine Rotation von 16,3 min⁻¹ aufwies. Die Zahlenwerte geben jeweils die in einem Zeitintervall von 60s erzielte Abschliffmenge in [g] an.

| Abschliffmasse in [g] Verwendetes Schleifmittel | 0s-60s | 60s-120s | 120s-180s | 180s-240s |
|---|---|---|---|---|
| Schleifkorn entspr. Beispiel 3 | 65 | 47 | 39 | 35 |
| | | | | |
| Schleifkorn entspr. Beispiel 1 | 52 | 35 | 27 | 23 |
| | | | | |
| Vergleichsmuster A | 32 | 17 | 12 | 9 |

### Beispiel 13

Für einen weiteren Vergleichsversuch wurden Schleifbänder der Maße 50 mm x 2000 mm angefertigt, wobei Schmelzkorund (Vergleichsmuster B), Schleifmittel entsprechend Beispiel 1 sowie Schleifmittel entsprechend Beispiel 3 verwendet wurden.

Geschliffen wurde ein Stahlrohr ST 35-8/I mit einem Durchmesser von 219,1 mm und einer Wanddicke von 6,3 mm, das eine Rotation mit einer Drehzahl von 33,4 min⁻¹ aufwies. Die Umlaufgeschwindigkeit des Schleifbandes betrug 38 m/s.

Die Zahlenwerte beziehen sich auf die bis zum jeweiligen Zeitpunkt erzielte gesamte Abschliffmasse in [kg].

| Verwendetes Schleifmittel | 5 min | 10 min | 15 min | 20 min | 25 min | 30 min | 35 min | 40 min | 45 min |
|---|---|---|---|---|---|---|---|---|---|
| Vergleichsmuster B | 0,91 | 1,46 | 1,93 | 2,35 | 2,75 | 2,98 | 3,16 | 3,29 | 3,44 |
| | | | | | | | | | |
| Beispiel 1: | 0,95 | 1,67 | 2,29 | 2,85 | 3,28 | 3,73 | 4,12, | 4,45 | 4,71 |
| | | | | | | | | | |
| Beispiel 3: | 1,29, | 2,27 | 3,18 | 4,01 | 4,80 | 5,57 | 6,26 | 6,87 | 7,42 |

## Patentansprüche

1. Schleifmittel, das im wesentlichen aus gesintertem polykristallinen keramischen Korund besteht, erhältlich durch das Sol-Gel-Verfahren, dadurch gekennzeichnet, daß der gesinterte Korund mehr als 0,01 Gew.-% Zinn, berechnet als Zinnoxid, als Bestandteil der polykristallinen Struktur enthält.

2. Schleifmittel nach Anspruch 1, dadurch gekennzeichnet, daß der Gehalt an Zinn, berechnet als Zinnoxid, nicht über 5 Gew.-% liegt.

3. Schleifmittel nach Anspruch 1 oder 2, dadurch gekennzeichnet, daß es Magnesium enthält.

4. Schleifmittel nach einem der Ansprüche 1 bis 3, dadurch gekennzeichnet, daß es Lithium enthält.

5. Schleifmittel nach Anspruch 4, dadurch gekennzeichnet, daß der Lithiumgehalt wenigstens 2 Gew.-%, berechnet als Lithiumoxid, beträgt.

6. Schleifmittel nach einem der Ansprüche 1 bis 5, dadurch gekennzeichnet, daß es Kobalt, Yttrium, Hafnium, Eisen und/oder seltene Erden enthält.

7. Schleifmittel nach einem der Ansprüche 1 bis 6, dadurch gekennzeichnet, daß es im Schliffbild zwei Partikelfraktionen deutlich unterschiedlicher Größe umfaßt, deren mittleres Abmessungsverhältnis mindestens 3:1 ist.

8. Schleifmittel nach Anspruch 7, dadurch gekennzeichnet, daß das Zinn sowie ggf. das Lithium in den kleineren Partikeln zu einem größeren Anteil als in den größeren enthalten ist.

9. Schleifmittel nach Anspruch 7 oder 8, dadurch gekennzeichnet, daß mindestens die kleineren Partikeln eine submikrone mittlere Größe aufweisen.

10. Schleifwerkzeug, dadurch gekennzeichnet, daß es ein Schleifmittel nach einem der Ansprüche 1 bis 9 enthält.

11. Schleifwerkzeug nach Anspruch 10, dadurch gekennzeichnet, daß mindestens 5 Gew.-% der darin enthaltenen Schleifmittel von dem Schleifmittel gemäß einem der Ansprüche 1 bis 9 gebildet ist.

12. Schleifwerkzeug nach Anspruch 10 oder 11, dadurch gekennzeichnet, daß es außerdem ein oder mehrere Schleifmittel hoher Härte wie Diamant, kubisches Bornitrit und/oder Siliziumkarbit enthält.

13. Verfahren zum Herstellen eines keramischen Korundschleifmittels, mit den Schritten:
a) Herstellen eines Sols, das ein Aluminiumhydroxid als Ausgangsstoff enthält, wobei durch Zugabe von entmineralisiertem Wasser sowie Salpetersäure zu dem Ausgangsstoff eine Suspension hergestellt wird, die zwecks Abtrennung grober Inhaltsstoffe zentrifugiert wird,
b) Überführen des Sols in ein Gel,
c) Trocknen und/oder Kalzinieren des Gels,
d) Brechen und ggf. Klassieren des getrockneten oder kalzinierten Zwischenprodukts,
e) Sintern des gebrochenen Zwischenprodukts,
dadurch gekennzeichnet, daß in Schritt a) dem Sol oder in Schritt b) dem Gel ein zinnhaltiger Stoff in einer solchen Menge zugesetzt wird, daß das in Schritt e) erhaltene gesinterte Material mehr als 0,01 Gew.-% Zinn, berechnet als Zinnoxid, enthält.

14. Verfahren nach Anspruch 13, dadurch gekennzeichnet, daß ein Zinn enthaltender Stoff im Sol in feinteiliger, fester und/oder gelöster Form zugegen ist.

15. Verfahren nach Anspruch 13 oder 14, dadurch gekennzeichnet, daß das Sol γ-Aluminiumoxid enthält.

16. Verfahren nach einem der Ansprüche 13 bis 15, dadurch gekennzeichnet, daß ein Lithium enthaltender Stoff in feinteiliger, fester und/oder gelöster Form im Sol zugegen ist.

17. Verfahren nach einem der Ansprüche 13 bis 16, dadurch gekennzeichnet, daß Magnesium in feinteiliger, fester und/oder gelöster Form im Sol zugegen ist.

18. Verfahren nach einem der Ansprüche 13 bis 17, dadurch gekennzeichnet, daß während 1 bis 20 min bei 1100°C bis 1600°C gesintert wird.

## Claims

1. Abrasive which consists essentially of sintered polycrystalline ceramic corundum and is obtainable by the sol-gel process, characterized in that the sintered corundum contains more than 0.01% by weight of tin, calculated as tin oxide, as constituent of the polycrystalline structure.

2. Abrasive according to Claim 1, characterized in that the tin content, calculated as tin oxide, does not lie above 5% by weight.

3. Abrasive according to Claim 1 or 2, characterized in that it contains magnesium.

4. Abrasive according to one of Claims 1 to 3, characterized in that it contains lithium.

5. Abrasive according to Claim 4, characterized in that the lithium content is at least 2% by weight, calculated as lithium oxide.

6. Abrasive according to one of Claims 1 to 5, characterized in that it contains cobalt, yttrium, hafnium, iron and/or rare earths.

7. Abrasive according to one of Claims 1 to 6, characterized in that in the polished section it comprises two particle fractions of significantly different size and having an average dimensional ratio of at least 3 : 1.

8. Abrasive according to Claim 7, characterized in that the tin and optionally the lithium is present in the smaller particles in a greater proportion than in the larger ones.

9. Abrasive according to Claim 7 or 8, characterized in that at least the smaller particles have a submicron average size.

10. Grinding tool characterized in that it contains an abrasive according to one of Claims 1 to 9.

11. Grinding tool according to Claim 10, characterized in that at least 5% by weight of the abrasive present therein is the abrasive according to one of Claims 1 to 9.

12. Grinding tool according to Claim 10 or 11, characterized in that it additionally contains one or more abrasives of high hardness such as diamond, cubic boron nitrite [sic] and/or silicon carbite [sic].

13. Process for preparing a ceramic corundum abrasive comprising the steps:
a) preparation of a sol containing an aluminium hydroxide as starting material, where a suspension is prepared by addition of demineralized water and nitric acid to the starting material and the suspension is centrifuged to remove coarse material present,
b) conversion of the sol into a gel,
c) drying and/or calcination of the gel,
d) crushing and optionally classification of the dried or calcined intermediate,
e) sintering of the crushed intermediate,
characterized in that a tin-containing material is added to the sol in step a) or to the gel in step b) in such an amount that the sintered material obtained in step e) contains more than 0.01% by weight of tin, calculated as tin oxide.

14. Process according to Claim 13, characterized in that a material containing tin is present in the sol in finely divided, solid and/or dissolved form.

15. Process according to Claim 13 or 14, characterized in that the sol contains γ-aluminium oxide.

16. Process according to one of Claims 13 to 15, characterized in that a material containing lithium is present in the sol in finely divided, solid and/or dissolved form.

17. Process according to one of Claims 13 to 16, characterized in that magnesium is present in the sol in finely divided, solid and/or dissolved form.

18. Process according to one of Claims 13 to 17, characterized in that sintering is carried out for from 1 to 20 minutes at from 1100°C to 1600°C.

## Revendications

1. Produit abrasif constitué pour l'essentiel de corindon céramique polycristallin fritté, obtenu par le procédé sol-gel, caractérisé en ce que le corindon fritté comprend plus de 0,01 % en poids d'étain, sur la base d'oxyde stannique, en tant que composant de la structure polycristalline.

2. Produit abrasif selon la revendication 1, caractérisé en ce que la teneur en étain, sur la base d'oxyde stannique, n'est pas supérieure à 5 % en poids.

3. Produit abrasif selon la revendication 1 ou 2, caractérisé en ce qu'il comprend du magnésium.

4. Produit abrasif selon l'une des revendications 1 à 3, caractérisé en ce qu'il comprend du lithium.

5. Produit abrasif selon la revendication 4, caractérisé en ce que la teneur en lithium est d'au moins 2 % en poids, sur la base d'oxyde de lithium.

6. Produit abrasif selon l'une des revendications 1 à 5, caractérisé en ce qu'il comprend du cobalt, de l'yttrium, de l'hafnium, du fer et/ou des terres rares.

7. Produit abrasif selon l'une des revendications 1 à 6, caractérisé en ce que sa micrographie comprend deux fractions de particules de tailles nettement différentes, dont le rapport dimensionnel moyen est d'au moins 3:1.

8. Produit abrasif selon la revendication 7, caractérisé en ce que l'étain et, le cas échéant, le lithium est compris dans les particules plus petites avec une proportion plus importante que dans les plus grandes.

9. Produit abrasif selon la revendication 7 ou 8, caractérisé en ce qu'au moins les particules plus petites présentent une taille moyenne submicrone.

10. Outil de meulage, caractérisé en ce qu'il comprend un produit abrasif selon l'une des revendications 1 à 9.

11. Outil de meulage selon la revendication 10, caractérisé en ce qu'au moins 5 % en poids des produits abrasifs compris dans celui-ci sont constitués du produit abrasif selon l'une des revendications 1 à 9.

12. Outil de meulage selon la revendication 10 ou 11, caractérisé en ce qu'il comprend également un ou plusieurs produits abrasifs d'une grande dureté, tels que du diamant, du nitrure de bore cubique et/ou du carbure de silicium.

13. Procédé de fabrication d'un produit abrasif céramique au corindon, comprenant les étapes suivantes:
a) préparation d'un sol sur la base d'un hydroxyde d'aluminium, où une suspension est réalisée par l'addition à la substance de base d'eau déminéralisée et d'acide nitrique, ladite suspension étant centrifugée pour séparer les composants grossiers;
b) transformation du sol en un gel;
c) séchage et/ou calcination du gel;
d) broyage et le cas échéant tri du produit intermédiaire séché ou calciné;
e) frittage du produit intermédiaire broyé,
caractérisé en ce qu'une substance stannique est ajoutée, au sol dans l'étape a) ou au gel dans l'étape b), en une quantité telle que le matériau fritté obtenu dans l'étape e) comprend plus de 0,01 % en poids d'étain, sur la base d'oxyde stannique.

14. Procédé selon la revendication 13, caractérisé en ce qu'une substance stannique est présente dans le sol sous forme solide et/ou dissoute de particules fines.

15. Procédé selon la revendication 13 ou 14, caractérisé en ce que le sol comprend de l'oxyde d'aluminium γ.

16. Procédé selon l'une des revendications 13 à 15, caractérisé en ce qu'une substance contenant du lithium est présente dans le sol sous forme solide et/ou dissoute de particules fines.

17. Procédé selon l'une des revendications 13 à 16, caractérisé en ce que du magnésium est présent dans le sol sous forme solide et/ou dissoute de particules fines.

18. Procédé selon l'une des revendications 13 à 17, caractérisé en ce que le frittage est réalisé pendant une durée de 1 à 20 min. à une température de 1100°C à 1600°C.
